# EUROPÄISCHE PATENTSCHRIFT

(11) **EP 3 460 008 B1**
(45) Veröffentlichungstag und Bekanntmachung des Hinweises auf die Patenterteilung: **04.09.2019**
(21) Anmeldenummer: 18195342.3
(22) Anmeldetag: 19.09.2018
(51) Int. Cl.: C09D 5/00

(54) **LAGERSTABILE BESCHICHTUNGSZUSAMMENSETZUNG**
STORAGE-STABLE COATING COMPOSITION
COMPOSITION DE REVÊTEMENT STABLE AU STOCKAGE

(30) Priorität: 26.09.2017 DE 102017008984
(43) Veröffentlichungstag der Anmeldung: 27.03.2019
(73) Patentinhaber: STO SE & Co. KGaA, 79780 Stühlingen (DE)
(72) Erfinder: van Leeuwen, Jack, 4800 Zofingen (CH); Bartmann, Kerstin, 79848 Bonndorf (DE); Troll, Michael, 79848 Bonndorf-Dillendorf (DE); Burgeth, Gerald, 79805 Eggingen (DE)
(74) Vertreter: Gottschalk, Matthias

(56) Entgegenhaltungen:
- EP-A1- 1 978 063
- WO-A1-2014/164632
- US-A- 6 084 008
- US-A1- 2010 279 078

## Beschreibung

Die Erfindung betrifft lagerstabile Zusammensetzungen zur Ausbildung von Beschichtungen an Bauwerken und dgl., umfassend wenigstens ein organisches Bindemittel, wenigstens einen Füllstoff und/oder Pigment, Wasser zur Einstellung einer pastösen Konsistenz der Zusammensetzung sowie ggf. übliche Additive.

Solche Zusammensetzungen müssen zwischen ihrer Herstellung und ihrer Verwendung oft lange Lagerzeiten von Wochen oder Monaten überdauern, während derer sie sich nicht relevant verändern dürfen. Wegen des Gehalts an organischen Bindemitteln in wässrigem Medium besteht die Gefahr, dass die Zusammensetzungen von Mikroben befallen werden, die sich von dem Bindemittel und anderen organischen Zusätzen ernähren. Das kann zur Unbrauchbarkeit der befallenen Zusammensetzung führen und muss daher wirksam verhindert werden.

Es ist daher bereits bekannt, solche Zusammensetzungen zu konservieren und gegen mikrobiellen Befall zu schützen.

Dabei kommt der Einsatz herkömmlicher Konservierungsstoffe generell nicht in Betracht, weil diese zunehmend rechtlichen Einschränkungen unterliegen. Es ist daher bereits vorgeschlagen worden, lagerstabile Zusammensetzungen der hier betrachteten Art ohne Gehalt an herkömmlichen Konservierungsstoffen zu schaffen, indem der pH-Wert der Zusammensetzung so erhöht wird, dass der mikrobielle Befall wirksam verhindert wird. Angestrebt wird dabei ein pH-Wert von wenigstens 10, da bei niedrigeren pH-Werten der mikrobielle Befall nicht mit ausreichender Sicherheit verhindert werden kann.

So erfolgt im Stand der Technik die pH-Wert - Erhöhung durch Zugabe von Wasserglas, zum Beispiel gemäß EP1297079.
Alternativ offenbaren die DE102014013455A1 und die WO2017144694A1 die Verwendung von Siliconaten als pH-Wert erhöhendes Additiv.

Es ist keine triviale Aufgabe, ein funktionsfähiges und wirtschaftlich brauchbares System zur Erhöhung des pH-Werts in solchen Zusammensetzungen zu finden.

Die Erhöhung des pH-Werts beispielsweise durch Zugabe von Lauge wie NaOH oder KOH genügt nicht. Der pH-Wert fällt dann innerhalb weniger Tage oder Wochen wieder, so dass der Befallsschutz nachlässt. Man benötigt einen Puffer mit ausreichender Pufferkapazität. Wasserglas ist aufgrund seiner -O-Si(OH)ₓ-Gruppen, x = 1 - 3, ein geeigneter Puffer mit großer Pufferkapazität im hochalkalischen Bereich. Ähnliches gilt für das Siliconat - System.

WO 2014/164632 A1 offenbart die Herstellung und Verwendung von synthetischem Hectorit. Dabei werden zwar Einzelbestandteile der beanspruchten Zusammensetzung erwähnt, jedoch keinerlei Zusammensetzungen, die neben einem Pigment noch ein organisches Bindemittel und Wasser enthalten sowie mit dem Wassergehalt auf eine pastöse Konsistenz eingestellt sind.

US 2010/279078 A1 offenbart Oberflächenbeschichtungen für Farbdruckerwalzen, speziell für Tintenstrahldrucker. Die Beschichtungen umfassen ein Fluoroelastomer und eine basische Magnesium-, Calcium- ofer Kaliumverbindung. Zur Verbesserung der Oberfläche wird die Beschichtung aufgetragen, dann mit Säure behandelt, um die basische Verbindung aufzulösen, und nachfolgend werden die Umsetzungsprodukte durch Abwaschen entfernt.

EP 1 978 063 A1 offenbart wässrige Dispersionen zur Herstellung hydrophober Beschichtungen für Papier (Beispiel 1) oder Pappe (Beispiel 16). Beschichtungen, die sich für Bauwerke oder dgl. eignen, werden nicht offenbart.

Die Dispersionen umfassen ein Pigment, ein organisches Bindemittel und Wasser. Das Pigment kann Calciumcarbonat und Magnesiumhydroxid enthalten. Alkalicarbonat wird nicht erwähnt, und das Dokument offenbart auch keine Bereichsgrenzen für den Gehalt an Alkalicarbonat.

US 6 084 008 A offenbart Flammschutzbeschichtungen auf Basis von Blähgraphit. Diese enthalten zusätzlich ein organisches Bindemittel und ein Absorptionsmittel für schädliche Gase, vorzugsweise Calciumcarbonat. Als Absorptionsbeschleuniger können verschiedene anorganische Verbindungen zugesetzt werden, die bei Erhitzung Wasser freisetzen, darunter Magnesiumhydroxid, vorzugsweise jedoch Aluminiumhydroxid.

Es besteht ein Bedürfnis für neuartige Systeme zur ausreichenden und dauerhaften Erhöhung des pH-Wertes bei erfindungsgemäßen Zusammensetzungen.

Solche Systeme müssen ausreichend hohe pH-Werte in den Zusammensetzungen über ausreichende Zeiträume bereitstellen. Sie müssen mit den weiteren Bestandteilen der Zusammensetzungen kompatibel sein und dürfen deren Brauchbarkeit nicht beeinträchtigen. Sie müssen den gesetzlichen Vorschriften entsprechen und sollen möglichst einfach und kostengünstig beschaffbar und einsetzbar sein.

Zur Lösung dieser Aufgaben dient erfindungsgemäß die Merkmalskombination des beigefügten unabhängigen Patentanspruchs 1.

Vorteilhafte Ausgestaltungen der Erfindung sind in den beigefügten abhängigen Ansprüchen definiert.

Erfindungsgemäß umfasst eine lagerstabile Zusammensetzung zur Ausbildung von Beschichtungen an Bauwerken und dgl. mit wenigstens einem organischen Bindemittel, wenigstens einem Füllstoff und/oder Pigment, Wasser zur Einstellung einer pastösen Konsistenz der Zusammensetzung sowie ggf. üblichen Additiven, daher einen Gehalt von 0,01 Gew.% bis 30 Gew.% wenigstens eines Erdalkalihydroxids und 0,01 Gew.% bis 10 Gew.% wenigstens eines Alkalicarbonats, jeweils bezogen auf das Gesamtgewicht der Zusammensetzung, wobei die Gehalte vorzugsweise so bemessen sind, dass sie zur Einstellung und Aufrechterhaltung eines pH-Wertes von wenigstens 10 der Zusammensetzung über wenigstens 30 Tage, vorzugsweise 60 Tage, mehr bevorzugt 90 Tage, noch mehr bevorzugt 180 Tage, speziell bevorzugt 360 Tage und noch spezieller bevorzugt 720 Tage ausreichen.

Vorzugsweise wird das Erdalkalihydroxid aus der Gruppe ausgewählt, die Kalziumhydroxid (Ca(OH)₂), Magnesiumhydroxid (Mg(OH)₂ und Bariumhydroxid (Ba(OH)₂) umfasst. Besonders bevorzugt besteht das Erdalkalihxdroxid im Wesentlichen oder ganz aus Kalziumhydroxid.

Vorzugsweise wird das Alkalicarbonat aus der Gruppe ausgewählt, die Lithiumcarbonat (Li₂CO₃), Natriumcarbonat (Na₂CO₃) und Kaliumcarbonat (K₂CO₃) umfasst. Dabei wird besonders bevorzugt, dass das Alkalicarbonat im Wesentlichen oder ganz aus Lithiumcarbonat besteht.

Wie auch in den Wasserglas-haltigen Systemen beruht die konservierende Wirkung v.a. auf die Erhöhung des pH-Werts durch die Basenzugabe in Form von Erdalkalihydroxid.

Das erfindungsgemäße System ist kein herkömmliches, wie in der Chemie definiertes Puffersystem mit einer schwachen Säure (Base) und dem dazu konjugierten Salz in einem bestimmten Mengenverhältnis, sondern ein Hydroxid-Speicher, der über einen langen Zeitraum langsam entleert wird. Diese Speicher-Entleerung wird - am Beispiel des als Erdalkalihydroxid erfindungsgemäß bevorzugten Kalziumhydroxids und des als Alkalicarbonat erfindungsgemäß bevorzugten Lithiumcarbonats- getrieben von der Verschiebung der Gleichgewichtslagen der einfachen Reaktionen:

Ca(OH)₂ ⇆ Ca²⁺ + 2 OH⁻

Li₂CO₃ + Ca(OH)₂ ⇆ 2 LiOH + CaCO₃ ↓

| | | | |
|---|---|---|---|
| Löslichkeiten: | Ca(OH)₂ | = 1,7 g/L | bei 20 °C |
| | CaCO₃ | = 0,014 g/L | bei 20 °C |
| | Li₂CO₃ | = 8,4 g/L | bei 20 °C |

Das Ca(OH)₂ ist zwar kein besonders gut lösliches Hydroxid. Es werden weniger Hydroxid-Ionen freigesetzt, verglichen mit anderen Basen wie Alkalihydroxide. Der pH-Wert ist jedoch ausreichend hoch zwischen 10 und 12. Im Laufe der Zeit werden die Hydroxid-Ionen jedoch durch andere (saure) Bestandteile der Beschichtungszusammensetzung (wie beispielsweise saure OH-Gruppen von Pigmenten oder Füllstoffen) neutralisiert oder ganz einfach durch das CO₂ aus der Umgebungsluft. Der pH-Wert sinkt langsam ab und fällt unter einen Wert, wo kein zuverlässiger mikrobiozider Schutz mehr besteht. Ohne den Zusatz des Alkalicarbonats würden zu langsam Hydroxid-Ionen aus dem Ca(OH)₂ nachgeliefert.

Die Nachlieferung der Hydroxid-Ionen aus dem Ca(OH)₂ wird deshalb durch das Li₂CO₃ beschleunigt. Das Gleichgewicht der obigen Reaktionsgleichung wird nach rechts verschoben, weil schwerlösliches CaCO₃ ausfällt. Der pH-Wert wird bei einem hohen Wert stabilisiert, solange Hydroxid-Ionen aus dem Ca(OH)₂ nachgeliefert werden können, also solange dieser Speicher noch "gefüllt" ist oder besteht. Das ausgefällte CaCO₃ kann nun auch noch als Füllstoff dienen. Das Li-Hydroxid ist extrem gut löslich, so dass alle Hydroxid-Ionen nun gelöst vorliegen und der pH-Wert hoch ist.

Die eigentliche Triebkraft ist damit die Kopplung der obigen Reaktionen sowie das Verschieben der beiden Gleichgewichte auf die rechte Seite (Produktseite).

Vorteilhaft ist dabei die leichte und kostengünstige Verfügbarkeit der Reaktanden. Sowohl Kalziumhydroxid als auch Lithiumcarbonat sind preisgünstig in großen Mengen im Handel erhältlich.

Die Menge des Ca(OH)₂ gibt vor, wie viele Hydroxid-Ionen freigesetzt werden können (= Größe der "Pufferkapazität"). Über die Li-Carbonat - Menge lässt sich steuern, wie schnell dieser Puffer entleert wird. In der Regel wird deshalb gewichtsmäßig gleich viel oder etwas weniger Li-Carbonat eingesetzt als Ca(OH)₂.

Prinzipiell funktioniert dieses gekoppelte System mit allen Alkalicarbonaten und Erdalkalihydroxiden, da sie die geeigneten Löslichkeiten aufweisen. Besonders geeignet sind aber Li-Carbonat, da dem Li⁺-Ion ebenfalls eine leicht mikrobielle Wirkung zugesagt wird, und Ca-Hydroxid, da dieses in fast unbeschränkten Mengen kostengünstig verfügbar ist.

Der Gehalt an Erdalkalihydroxid in der Zusammensetzung liegt vorzugsweise zwischen 0,1 Gew.% und 15 Gew.%, mehr bevorzugt zwischen 0,2 Gew.% und 5 Gew.% .

Der Gehalt an Alkalicarbonat in der Zusammensetzung liegt vorzugsweise zwischen 0,1 Gew.% und 8 Gew.%, mehr bevorzugt zwischen 0,2 Gew.% und 5 Gew.%.

Es ist vorteilhaft, wenn die Zusammensetzung das Erdalkalihydroxid und das Alkalicarbonat in einem Gewichtsverhältnis zwischen 1:1 und 3:1, vorzugsweise zwischen 1:1 und 2:1 umfasst.

Die Zusammensetzung hat vorzugsweise einen pH-Wert von mindestens 10,5, mehr bevorzugt mindestens 11, über wenigstens 30 Tage, vorzugsweise wenigstens 60 Tage, mehr bevorzugt 90 Tage, noch mehr bevorzugt 180 Tage, speziell bevorzugt 360 Tage und noch spezieller bevorzugt 720 Tage.

Die Zusammensetzung gilt als lagerstabil im Sinne der Erfindung, wenn sich ihr pH-Wert bei Lagerung unter Normalbedingungen über wenigstens 30 Tage um nicht mehr als 1 ändert.

Die Zusammensetzung enthält weiterhin wenigstens ein organisches Bindemittel in Form eines Polymer-Bindemittel bzw. Polymerdispersion.

Der Gehalt an wenigstens einem organischen Bindemittel liegt bevorzugt zwischen 1 Gew.% und 40 Gew.%, mehr vorzugsweise zwischen 2 Gew.% und 30 Gew.%, besonders bevorzugt zwischen 2,5 Gew.% und 25 Gew.%, jeweils berechnet als Feststoff.

Das organische Bindemittel ist in bevorzugten Ausführungsformen der Erfindung ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen umfasst, wobei Homopolymere oder Copolymere von Acrylsäure und/oder Methacrylsäure bevorzugt sind.

Bevorzugt sind allgemein wässrige Polymerdispersionen, die ausreichend verseifungsstabil sind.

Die erfindungsgemäßen Zusammensetzungen enthalten Füllstoffe und/oder Pigmente.

Sie haben vorzugsweise einen Gehalt an (wenigstens einem) Füllstoff und/oder Pigment zwischen 10 Gew.% und 90 Gew.%, mehr vorzugsweise zwischen 20 Gew.% und 85 Gew,%, und besonders bevorzugt zwischen 25 Gew.% und 80 Gew.%.

In bevorzugten Ausführungsformen der Erfindung ist der wenigstens eine Füllstoff bzw. das wenigstens eine Pigment ausgewählt aus der Gruppe, die pyrogen gefällte Kieselsäure, gefällte Kieselsäure, Silizium-Aluminium-Mischoxide, Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst, wobei Titandioxid, Silikate und Carbonate besonders bevorzugt sind. Bei Pigmenten und Farbstoffen ist darauf zu achten, dass sie ausreichende Basenstabilität mitbringen.

Die erfindungsgemäßen Zusammensetzungen sind wässrig - pastös, also keine Trockenmischungen. Sie haben vorzugsweise einen Wassergehalt zwischen 5 Gew.% und 40 Gew.%., bezogen auf das Gesamtgewicht der Zusammensetzung.

In bevorzugten Ausführungsformen der Erfindung haben die Zusammensetzungen einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

Vorzugsweise enthält eine verarbeitungsfertige erfindungsgemäße Beschichtungszusammensetzung daher:

| | | |
|---|---|---|
| 1 - 40 Gew.% | org. Bindemittel (gerechnet als Feststoff), | bvzgt. 2 - 30 Gew%, bvzgter 2,5 - 25 Gew.% |
| 10 - 90 Gew.% | Füllstoffe / Pigmente | bvzgt. 20 - 85 Gew%, bvzgter 25 - 80 Gew.% |
| 0,01 - 30 Gew.% | Erdalkalihydroxid | bvzgt. 0,1 - 15 Gew%, bvzgter 0,2 - 5 Gew.% |
| 0,01 - 10 Gew.% | Alkalicarbonat | bvzgt. 0,1 - 8 Gew%, bvzgter 0,2 - 5 Gew.% |
| 0,1 - 10 Gew.% | Additive | bvzgt. 0,2 - 8 Gew%, bvzgter 0,5 - 6 Gew.% |
| 5 - 40 Gew.% | Wasser | |

### Ausführungsbeispiel:

Als Ausführungsbeispiel der Erfindung wird die Rezeptur einer erfindungsgemäßen Dispersionsfarbe wie folgt angegeben:

| | |
|---|---|
| Wasser | 28 Gew.-Teile |
| Wässrige Polymerdispersion (ca. 50 % Feststoffgehalt) | 30 Gew.-Teile |
| Füllstoffe und Pigmente | 37 Gew.-Teile |
| Additive (insb. Rheologie-Additive, Hydrophobierungsmittel, Entschäumer, Filmbildehilfsmittel, Fasern, Dispergiermittel, Konservierungsmittel, etc.) | 5 Gew.-Teile |

Der pH-Wert dieses Farbansatzes lag bei 8,3. Ohne Zusatz von Konservierungsstoffen ist die Gefahr des mikrobiellen Befalls sehr groß.

Dieser 'herkömmlichen' Dispersionsfarbe wurden 0,5 Gew.-Teile Ca(OH)₂ (in Form einer Calciumhydroxid-Suspension mit 25 Gew. % Ca(OH)₂) und 0,5 Gew.-Teile Li - Carbonat zugegeben.

Der pH-Wert stieg auf 11,6 (unmittelbar nach Zugabe). Sieben Wochen später lag der pH-Wert noch bei 11,0. Die rheologischen Eigenschaften (Viskosität) blieben in diesem Zeitraum nahezu unverändert. Es konnte kein mikrobieller Befall festgestellt werden. Die Dispersionsfarbe erwies sich als lagerstabil.

## Patentansprüche

1. Lagerstabile Zusammensetzung zur Ausbildung von Beschichtungen an Bauwerken und dgl.,
umfassend wenigstens ein organisches Bindemittel, wenigstens einen Füllstoff und/oder Pigment, Wasser zur Einstellung einer pastösen Konsistenz der Zusammensetzung sowie ggf. übliche Additive,
**gekennzeichnet durch** einen Gehalt von 0,01 Gew.% bis 30 Gew.% wenigstens eines Erdalkalihydroxids und 0,01 Gew.% bis 10 Gew.% wenigstens eines Alkalicarbonats, jeweils bezogen auf das Gesamtgewicht der Zusammensetzung.

2. Zusammensetzung nach Anspruch 1, wobei die Gehalte so bemessen sind, dass sie zur Einstellung und Aufrechterhaltung eines pH-Wertes von wenigstens 10 der Zusammensetzung über wenigstens 30 Tage, vorzugsweise 60 Tage, mehr bevorzugt 90 Tage, noch mehr bevorzugt 180 Tage, speziell bevorzugt 360 Tage und noch spezieller bevorzugt 720 Tage ausreichen.

3. Zusammensetzung nach Anspruch 1 oder 2,
**dadurch gekennzeichnet, dass** der Gehalt an Erdalkalihydroxid zwischen 0,1 Gew.% und 15 Gew.%, vorzugsweise zwischen 0,2 Gew.% und 5 Gew.% liegt.

4. Zusammensetzung nach einem der Ansprüche 1 bis 3,
**dadurch gekennzeichnet, dass** der Gehalt an Alkalicarbonat zwischen 0,1 Gew.% und 8 Gew.%, vorzugsweise zwischen 0,2 Gew.% und 5 Gew.% liegt.

5. Zusammensetzung nach einem der Ansprüche 1 bis 4,
**dadurch gekennzeichnet, dass** das Erdalkalihydroxid aus der Gruppe ausgewählt ist, die Kalziumhydroxid (Ca(OH)₂), Magnesiumhydroxid (Mg(OH)₂ und Bariumhydroxid (Ba(OH)₂) umfasst, und vorzugsweise im Wesentlichen oder ganz aus Kalziumhydroxid besteht.

6. Zusammensetzung nach einem der Ansprüche 1 bis 5,
**dadurch gekennzeichnet, dass** das Alkalicarbonat aus der Gruppe ausgewählt ist, die Lithiumcarbonat (Li₂CO₃), Natriumcarbonat (Na₂CO₃) und Kaliumcarbonat (K₂CO₃) umfasst, und vorzugsweise im Wesentlichen oder ganz aus Lithiumcarbonat besteht.

7. Zusammensetzung nach einem der vorstehenden Ansprüche,
**dadurch gekennzeichnet, dass** die Zusammensetzung das Erdalkalihydroxid und das Alkalicarbonat in einem Gewichtsverhältnis zwischen 1:1 und 3:1, vorzugsweise zwischen 1:1 und 2:1 umfasst.

8. Zusammensetzung nach einem der vorstehenden Ansprüche,
**gekennzeichnet durch** einen pH-Wert von mindestens 10,5, vorzugsweise mindestens 11, über wenigstens 30 Tage, vorzugsweise wenigstens 60 Tage.

9. Zusammensetzung nach einem der vorstehenden Ansprüche,
**gekennzeichnet durch** einen Gehalt an wenigstens einem organischen Bindemittel zwischen 1 Gew.% und 40 Gew.%, vorzugsweise zwischen 2 Gew.% und 30 Gew,%, besonders bevorzugt zwischen 2,5 Gew.% und 25 Gew.%, jeweils berechnet als Feststoff.

10. Zusammensetzung nach einem der vorstehenden Ansprüche,
**gekennzeichnet durch** einen Gehalt an wenigstens einem Füllstoff und/oder Pigment zwischen 10 Gew.% und 90 Gew.%, vorzugsweise zwischen 20 Gew.% und 85 Gew.%, besonders bevorzugt zwischen 25 Gew.% und 80 Gew.%.

11. Zusammensetzung nach einem der vorstehenden Ansprüche,
**gekennzeichnet durch** einen Wassergehalt zwischen 5 Gew.% und 40 Gew.%.

12. Zusammensetzung nach einem der vorstehenden Ansprüche,
**gekennzeichnet durch** einen Gehalt an wenigstens einem organischen Bindemittel ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkydpolymeren, Polyvinylalkohol und deren Mischungen umfasst, wobei Homopolymere oder Copolymere von Acrylsäure und/oder Methacrylsäure bevorzugt sind.

13. Zusammensetzung nach einem der vorstehenden Ansprüche,
**gekennzeichnet durch** einen Gehalt an wenigstens einem Füllstoff oder Pigment, ausgewählt aus der Gruppe, die pyrogen gefällte Kieselsäure, gefällte Kieselsäure, Silizium-Aluminium-Mischoxide, Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst wobei Titandioxid, Silikate und Carbonate bevorzugt sind.

14. Zusammensetzung nach einem der vorstehenden Ansprüche,
**gekennzeichnet durch** einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

15. Zusammensetzung nach einem der vorstehenden Ansprüche,
**dadurch gekennzeichnet, dass** die Zusammensetzung ein Putz, eine Farbe, insbesondere eine Dispersionsfarbe, eine dekrative Endbeschichtung oder dgl. ist.

## Claims

1. A composition which is stable upon storage for the formation of coatings on buildings etc, comprising at least one organic binder, at least one filler and/or pigment, water for the production of a pasty consistency in the composition, as well as optional conventional additives,
**characterized by** a 0.01% by weight to 30% by weight content of at least one alkaline earth hydroxide and 0.01% by weight to 10% by weight of at least one alkali carbonate, respectively with respect to the total weight of the composition.

2. The composition as claimed in claim 1, wherein the amounts are chosen in a manner such that they are sufficient to set and maintain a pH of at least 10 in the composition over at least 30 days, preferably 60 days, more preferably 90 days, yet more preferably 180 days, particularly preferably 360 days and yet more especially 720 days.

3. The composition as claimed in claim 1 or claim 2, **characterized in that** the content of alkaline earth hydroxide is between 0.1% by weight and 15% by weight, preferably between 0.2% by weight and 5% by weight.

4. The composition as claimed in one of claims 1 to 3, **characterized in that** the content of alkali carbonate is between 0.1% by weight and 8% by weight, preferably between 0.2% by weight and 5% by weight.

5. The composition as claimed in one of claims 1 to 4, **characterized in that** the alkaline earth hydroxide is selected from the group which comprises calcium hydroxide (Ca(OH)₂), magnesium hydroxide (Mg(OH)₂) and barium hydroxide (Ba(OH)₂), and preferably essentially or entirely consists of calcium hydroxide.

6. The composition as claimed in one of claims 1 to 5, **characterized in that** the alkali carbonate is selected from the group which comprises lithium carbonate (Li₂CO₃), sodium carbonate (Na₂CO₃) and potassium carbonate (K₂CO₃), and preferably essentially or entirely consists of lithium carbonate.

7. The composition as claimed in one of the preceding claims,
**characterized in that** the composition comprises the alkaline earth hydroxide and the alkali carbonate in a ratio by weight of between 1:1 and 3:1, preferably of between 1:1 and 2:1.

8. The composition as claimed in one of the preceding claims,
**characterized by** a pH of at least 10.5, preferably at least 11, over at least 30 days, preferably at least 60 days.

9. The composition as claimed in one of the preceding claims,
**characterized by** a content of at least one organic binder of between 1% by weight and 40% by weight, preferably of between 2% by weight and 30% by weight, particularly preferably of between 2.5% by weight and 25% by weight, respectively with respect to the solid material.

10. The composition as claimed in one of the preceding claims,
**characterized by** a content of at least one filler and/or pigment of between 10% by weight and 90% by weight, preferably of between 20% by weight and 85% by weight, particularly preferably of between 25% by weight and 80% by weight.

11. The composition as claimed in one of the preceding claims,
**characterized by** a water content of between 5% by weight and 40% by weight.

12. The composition as claimed in one of the preceding claims,
**characterized by** a content of at least one organic binder selected from the group which comprises homopolymers, copolymers or terpolymers of acrylic acid and/or methacrylic acid, itaconic acid as well as acid esters such as ethyl acrylate, butyl acrylate; styrene, substituted or unsubstituted vinyl chloride, vinyl acetate, acrylamides and acrylonitrile; water-dilutable alkyd polymers, combinations of (meth)acrylic/alkyd polymers, polyvinyl alcohol and mixtures thereof, wherein homopolymers or copolymers of acrylic acid and/or methacrylic acid are preferred.

13. The composition as claimed in one of the preceding claims,
**characterized by** a content of at least one filler or pigment selected from the group which comprises pyrogenically precipitated silica, precipitated silica, silicon-aluminium mixed oxides, alkaline earth carbonates such as calcium carbonate, silicon dioxide, silicates, for example aluminosilicates, sulphates, for example barium sulphate, titanium dioxide, colour pigments, for example iron oxides, bismuth vanadate or mixtures thereof, wherein titanium dioxide, silicates and carbonates are preferred.

14. The composition as claimed in one of the preceding claims,
**characterized by** a content of at least one additive such as, for example, a rheological additive, a defoaming agent, a water-repellent agent, fibres, a film-forming agent and a dispersing agent.

15. The composition as claimed in one of the preceding claims,
**characterized in that** the composition is a render, a paint, in particular an emulsion paint, a decorative finishing coat or the like.

## Revendications

1. Composition stable au stockage, destinée à créer des revêtements sur des bâtiments et similaires, comprenant au moins un liant organique, au moins un agent de charge et/ou pigment, de l'eau pour régler une consistance pâteuse de la composition, ainsi que le cas échéant des additifs conventionnels, **caractérisée par** une teneur de 0,01 % en poids à 30 % en poids d'au moins un hydroxyde alcalino-terreux et de 0,01 % en poids à 10 % en poids d'au moins un carbonate alcalin, rapportés chacun au poids total de la composition.

2. Composition selon la revendication 1, les teneurs étant calculées de sorte à être suffisantes pour le réglage et le maintien d'une valeur pH d'au moins 10 de la composition sur au moins 30 jours, de préférence sur 60 jours, de manière plus préférentielle, sur 90 jours, de manière encore plus préférentielle, sur 180 jours, de manière particulièrement préférentielle sur 360 jours et de manière encore plus particulièrement préférentielle, sur 720 jours.

3. Composition selon la revendication 1 ou 2, **caractérisée en ce que** la teneur en hydroxyde alcalino-terreux est comprise entre 0,1 % en poids et 15 % en poids, de préférence entre 0,2 % en poids et 5 % en poids.

4. Composition selon l'une quelconque des revendications 1 à 3, **caractérisée en ce que** la teneur en carbonate alcalin est comprise entre 0,1 % en poids et 8 % en poids, de préférence entre 0,2 % en poids et 5 % en poids.

5. Composition selon l'une quelconque des revendications 1 à 4, **caractérisée en ce que** l'hydroxyde alcalino-terreux est sélectionné dans le groupe qui comprend l'hydroxyde de calcium (Ca(OH)₂), l'hydroxyde de magnésium (Mg(OH)₂ et l'hydroxyde de baryum (Ba(OH)₂), et est constitué de préférence essentiellement ou totalement d'hydroxyde de calcium.

6. Composition selon l'une quelconque des revendications 1 à 5, **caractérisée en ce que** le carbonate alcalin est sélectionné dans le groupe qui comprend le carbonate de lithium (Li₂CO₃), le carbonate de sodium (Na₂CO₃) et le carbonate de calcium (K₂Co₃), et est constitué de préférence essentiellement ou totalement de carbonate de lithium.

7. Composition selon l'une quelconque des revendications précédentes, **caractérisée en ce que** la composition comprend l'hydroxyde alcalino-terreux et le carbonate alcalin selon un rapport en poids compris entre 1 : 1 et 3 : 1, de préférence entre 1 : 1 et 2 : 1.

8. Composition selon l'une quelconque des revendications précédentes, **caractérisée par** une valeur pH d'au moins 10,5, de préférence d'au moins 11, sur au moins 30 jours, de préférence sur au moins 60 jours.

9. Composition selon l'une quelconque des revendications précédentes, **caractérisée par** une teneur en au moins un liant organique comprise entre 1 % en poids et 40 % en poids, de préférence comprise entre 2 % en poids et 30 % en poids, de manière particulièrement préférentielle, comprise entre 2,5 % en poids et 25 % en poids, chaque fois calculée sous la forme de solide.

10. Composition selon l'une quelconque des revendications précédentes, **caractérisée par** une teneur en au moins un agent de charge et/ou en un pigment comprise entre 10 % en poids et 90 % en poids, de préférence entre 20 % en poids et 85 % en poids, de manière particulièrement préférentielle, entre 25 % en poids et 80 % en poids.

11. Composition selon l'une quelconque des revendications précédentes, **caractérisée par** une teneur en eau comprise entre 5 % en poids et 40 % en poids.

12. Composition selon l'une quelconque des revendications précédentes, **caractérisée par** une teneur au moins un liant organique choisi dans le groupe qui comprend les homopolymères, les copolymères ou les terpolymères de l'acide acrylique et/ou de l'acide méthacrylique, de l'acide itaconique, ainsi que les esters d'acide, comme l'acrylate d'éthyle, l'acrylate de butyle ; le styrène, le chlorure de vinyle substitué ou non substitué, l'acétate de vinyle, les acrylamides et l'acrylonitrile; les polymères alkyde, des associations de polymères (meth)acryl/alkyde, l'alcool polyvinylique et leurs mélanges, l'homopolymère ou le copolymère de l'acide acrylique et/ou de l'acide méthacrylique étant préconisés.

13. Composition selon l'une quelconque des revendications précédentes, **caractérisée par** une teneur en au moins un agent de charge ou pigment choisi dans le groupe qui comprend l'acide silicique pyrogène précipité, l'acide silicique précipité, les oxydes mixtes de silicium-aluminium, les carbonates alcalino-terreux comme le carbonate de calcium, le dioxyde de silicium, les silicates, par exemple les aluminosilicates, les sulfates, par exemple les sulfates de baryum, le dioxyde de titane, les pigments colorés, par exemple les oxydes de fer, les vanadates de bismuth ou des mélanges de ces derniers, le dioxyde de titane, les silicates et les carbonates étant préconisés.

14. Composition selon l'une quelconque des revendications précédentes, **caractérisée par** une teneur en au moins un additif, tel que par exemple un additif rhéologique, un agent anti-mousse, un agent conférant le caractère hydrophobe, des fibres, un agent auxiliaire filmogène et un agent de dispersion.

15. Composition selon l'une quelconque des revendications précédentes, **caractérisée en ce que** la composition est un crépi une peinture, notamment une peinture à dispersion, un revêtement de finition décoratif ou similaires.
